# EUROPEAN PATENT SPECIFICATION

(11) **EP 1 458 176 B1**
(45) Date of publication and mention of the grant of the patent: **02.05.2012**
(21) Application number: 04251441.4
(22) Date of filing: 12.03.2004
(51) Int. Cl.: H04N 1/00, G03G 15/00, G06F 3/023

(54) **Image forming apparatus and function key assignment method**
Bilderzeugungsgerät und Funktionstastenzuordnungsverfahren
Appareil de formation d'images et procédé d'attribution de touches de fonction

(30) Priority: 13.03.2003 JP 2003068147; 10.03.2004 JP 2004067472
(43) Date of publication of application: 15.09.2004
(73) Proprietor: Ricoh Company, Ltd., Tokyo 143-8555 (JP)
(72) Inventor: Tanaka, Hiroyuki, Ogoori-shi Fukuoka (JP); Shimizu, Kohji, Dazaifu-shi Fukuoka (JP)
(74) Representative: Leeming, John Gerard

(56) References cited:
- JP-A- 4 333 910
- US-A- 4 699 501
- US-A- 4 906 117
- US-A- 5 907 325
- US-A1- 2001 003 097
- US-A1- 2002 136 563
- US-A1- 2002 180 622
- US-B1- 6 378 234

## Description

The present invention relates to techniques for assigning an application to a function key in an image forming apparatus (to be referred to as a compound machine hereinafter) that can mount a plurality of applications such as a copy application, a printer application, a scanner application, a facsimile application and the like.

Recently, a compound machine that includes functions of a printer, a copier, a facsimile, a scanner and the like in a cabinet is generally known. The compound machine includes a display part, a printing part and an image pickup part and the like in a cabinet. In the compound machine, pieces of software corresponding to the printer, copier and facsimile. respectively are provided, so that the compound machine functions as the printer, the copier, the scanner and the facsimile respectively by switching the pieces of software.

Since the conventional compound machine is provided with respective pieces of application software for the printer, the copier, the scanner and the facsimile, much time is required for developing each application. To solve this problem, the applicant has developed a compound machine including hardware resources, a plurality of applications, and a platform including various control services provided between the applications and the hardware resources. The hardware resources are used for image forming processes for a display part, a printing part and an image pickup part. The applications perform processes intrinsic for user services of printer, copier and facsimile and the like. The platform includes various control services for performing management of hardware resources necessary for at least two applications commonly, and for performing execution control of the applications and image forming processes, when a user service is executed.

According to such a new compound machine, the applications and the control services are provided separately. Thus, after the compound machine is shipped, users or third party venders can develop new applications to install on the compound machine without change system side software.

As to the compound machine that can include a plurality of applications, each application can be selected on the operation part (to be referred to as "operation panel") by using a function key. Japanese laid-open patent application No.JP-A-11-327373 discloses a technique on the function key.

The number of the function keys of the compound machine is determined according to the configuration of the compound machine. For example, as to a compound machine including three functions : printer, copier and scanner, three key tops are attached to the operation panel as respective function keys for the three functions. As one method for assigning an application to the function key, by writing correspondence between the application and the function key in a program, the application can be assigned to the function key unchangeably- However, in. this case, applications cannot be changed or added flexibly.

Therefore, any application should be assigned to any function key- Therefore, according to the conventional compound machine, a function key to be assigned to an application can be selected on the operation display part (touch panel) of the operation panel when the application is installed, for example. However, according to the conventional compound machine, there is a case where the function key cannot be assigned to the application properly.

Even when functions for enabling five function keys are implemented in the inside of the compound machine, there is a case where only three function keys are actually usable as mentioned above. In such a case, when function key assignment is performed, the compound machine cannot recognize which function keys are actually usable, so that the compound machine may display a screen indicating that five function keys are usable. As a result, there is a problem in that the user may select an unusable function key for assigning an application.

US-A-2002/0180622 discloses a method for extending the functionality of application buttons on a limited resource computing device. Remapping of buttons is performed by command.

US-A-4,699,501 discloses an image forming device with an operation panel control function. Keys adjacent the operation panel perform multiple functions as indicated in the operation panel.

US-A-5,907,325 discloses a video editing apparatus in which different functions may be assigned to function keys by selecting from a list.

US-A- 2002/136563 discloses programming touch keys by touching a representation of the touch key in question. Since the representation is not displayed at the normal touch key position, it is possible to program it although it may not be usable.

US-A- 2001/003097 discloses software hot keys with multiple functions assigned thereto.

An object of the present invention is to provide techniques for assigning applications to function keys correctly.

The above-mentioned object is achieved by an image forming apparatus and a method for assigning an application to a function key as defined in the appended claims.

According to the present invention, since the selected application is assigned to a function key that is actually pushed, the problem in that the application may be assigned to a function key that is unusable is overcome.

The function key may be a hardware key or a software key that is displayed on the operation display part of the image forming apparatus. In addition, assignment by the assigning part is performed when the image forming apparatus is in a mode for assigning the selected application to the function key.

In the image forming apparatus, when assignment of the selected application is performed, the image forming apparatus may display a guidance screen indicating an operation of the function key on the operation display part of the image forming apparatus.

By displaying the guidance screen, the user can perform the assignment of the application according to the guidance screen, so that the user can perform the assignment easily and with reliability. The guidance screen includes an image of an operation panel of the image forming apparatus and an image for guiding a user to the function key.

The image forming apparatus may display a screen indicating the number of applications assigned to the function key. Accordingly, the user can know the number of applications assigned to each function key.

When the function key is pushed for the selected application, the image forming apparatus may display a screen indicating that the function key cannot be assigned to the selected application if the number of applications assigned to the function key already reaches a limit number. By displaying such screen, limited number of applications can be assigned to a function key.

In the image forming apparatus, the assigning. part may include:
a part obtaining a function key ID corresponding to the pushed function key; and
a part storing an application ID of the selected application and the obtained function key ID in which the application ID is associated with the function key ID.

According to the present invention, since the function key ID and the application ID are associated with each other, the image forming apparatus can recognize which application is assigned to which function key..

In addition to the function key ID, the image forming apparatus may store extension key IDs for identifying a plurality of applications assigned to the function key. Accordingly, the image forming apparatus can identify an application from a plurality of applications that is assigned to a function key.

In addition, when a function key to which a plurality of applications are assigned is pushed, the image forming apparatus may display a screen including the names of the plurality of applications for a user to select one application from the plurality of applications. By displaying the screen, the user can select one application when a plurality of applications are assigned to a function key.

In addition, the image forming apparatus may display application status for each of the plurality of applications. Accordingly, the user can determine whether an application that the user want to use is usable or not. For showing the application status, an LED attached to a function key can be used if one application is assigned to the function key. On the other hand, according to the present invention, the user can know application status for a plurality of applications assigned to the function key.

For selecting an application, instead of using the selection screen, the image forming apparatus may select one application from a plurality of applications according to a number of times a user pushes a function key to which the plurality of applications are assigned within a time period.

According to the present invention, without using the selection screen, application switching can be performed quickly.

The image forming apparatus may select one application from a plurality of applications in which the one application corresponds to an extension key ID that is the same as a number of times a user pushes the function key to which the plurality of applications are assigned within a time period. Accordingly, the user can change a currently used application to a desired application by pushing the function key a number of times same as the extension key ID corresponding to the desired application.

Other objects, features and advantages of the present invention will become more apparent from the following detailed description when read in conjunction with the accompanying drawings, in which:
Fig.1 shows an example of the operation panel of the compound machine according to an embodiment of the present invention;
Fig.2 is a block diagram of a compound machine 100 according to the embodiment of the present invention;
Fig.3 shows an example of a hardware configuration of the compound machine 100;
Fig.4 shows an example of an initial setting menu screen;
Fig.5 shows an example of a switch key setting screen;
Fig.6 shows an example of a screen guiding a user to push a function key;
Fig.7 shows another example of a screen guiding a user to push a function key;
Fig.8 is a figure for explaining about pushing of a function key;
Fig.9 shows a verification screen;
Fig.10 is another example screen displayed after the function key is pushed;
Fig.11 is a screen example showing a case where the user try to assign an application to a function key to which limit number of applications are already assigned;
Fig.12 is a screen example showing completion of assignment;
Fig.13 is an example of the switch key setting screen after assignment is performed;
Fig.14 is a figure for explaining the outline of the method of assigning the application to the function key;
Fig.15 shows an example of an application management table;
Fig.16 is a flowchart for explaining operations of the compound machine for assigning the application to the function key;
Fig.17 is a figure indicating exchange of main data among modules for assigning the application to the function key;
Fig.18 is an example of an application selection screen;
Figs.19A and 19B show screen examples displayed when an application is launched successfully;
Figs.20A and 20B show screen examples displayed when an application is not launched successfully;
Fig.21 is a figure for explaining the outline of the method of switching an application;
Fig.22 is a flowchart for explaining operations of the compound machine when an application is switched;
Fig.23 is a figure showing exchange of main data among modules when an application is switched to another application;
Fig.24 is a flowchart for explaining operations of the compound machine when an application is switched to another application and when the application selection screen is not used;
Fig.25 shows a screen example for assigning a function selection button to an application.

In the following, the image forming apparatus and the method for assigning applications to the function keys according to embodiments of the present invention are described with reference to figures.

First, the outline of the embodiment of the present invention is described in the following.

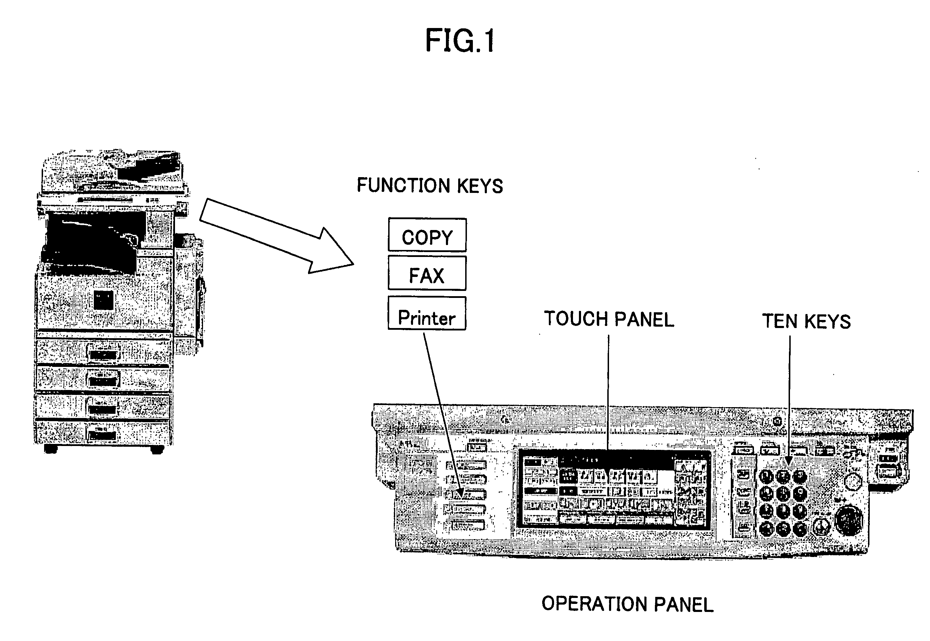

Fig.1 shows an example of the operation panel of the compound machine according to an embodiment of the present invention. The operation panel includes function keys each having a key top, an operation display part (to be also referred to as a touch panel) for displaying information and for operating, and ten keys that includes a start button. The function key may be referred to as an application switching key.

In this embodiment, when an application is installed, for example, the user pushes a function key to which the user wants to assign the application. That is, the compound machine displays a guidance message "push a key to which you want to assign the selected application" on the touch panel screen, and assigns the application to a function key pushed by the user. Conventionally, since the assigning operation was performed only on the screen, there is a possibility that an unusable function key without the key top may be assigned to an application. On the other hand, according to the present invention, by pushing an actually usable function key for assigning the function key to an application, the application can be assigned to a usable function key with reliability.

Next, the compound machine 100 that enables the above-mentioned assignment operation is described in detail.

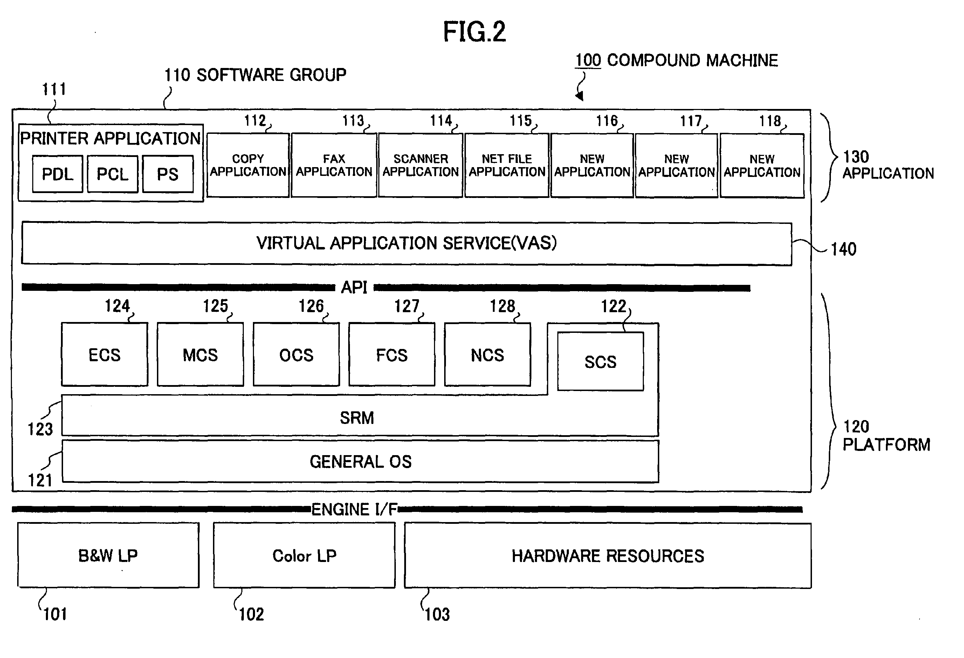

Fig.2 is a block diagram of a compound machine 100 according to the embodiment of the present invention.

As shown in Fig.2, the compound machine 100 includes hardware resources 103 and a software group 110. The hardware resources 103 include a black and white laser printer (B&W LP) 101, a color laser printer 102, and hardware resources such as a scanner, a facsimile, a hard disk, memory (RAM, NV-RAM, ROM and the like) and a network interface. The-software group 110 includes a platform 120, applications 130 and a virtual application service 140 (to be referred to as VAS hereinafter).

The platform 120 includes control services for interpreting a process request from an application to issue an acquiring request for the hardware resources, a system resource manager (SRM) 123 for managing one or more hardware resources and arbitrating the acquiring requests from the control services, and a general-purpose OS 121.

The control services include a plurality of service modules, which are a system control service (SCS) 122, an engine control service (ECS) 124, a memory control service (MCS) 125, an operation panel control service (OCS) 126, a fax control service (FCS) 127, and a network control service (NCS) 128. The platform 120 has application program interfaces (API) that can receive process requests from the applications 130 by using predetermined functions.

The general purpose OS 121 is a general purpose operating system such as UNIX, and can execute each piece of software of the platform 120 and the applications 130 concurrently as respective processes.

The process of the SRM 123 is for performing control of the system and performing management of resources with the SCS 122. The process of the SRM 123 performs arbitration and execution control for requests from the upper layer that uses hardware resources including engines such as the scanner part and the printer part, a memory, a HDD file, and a host I/Os (Centronics I/F, network I/F IEEE1394 I/F, RS232C I/F and the like).

The process of the SCS 122 performs application management, control of the operation panel, display of system screen, LED display, resource management, and interrupt application control. In this embodiment, the SCS 122 sends key information from the operation panel to the VAS 140, and the SCS 122 receives IDs from the VAS 140 and makes settings for function key assignment. Detailed processes are described later.

The process of the ECS 124 controls engines of hardware resources including the white and black laser printer (B&W LP) 101, the color laser printer (Color LP) 102, the scanner, and the facsimile and the like.

The process of the MCS 125 obtains and releases an area of the image memory, uses the hard disk apparatus (HDD), and compresses and expands image data. The process of the FCS 127 provides APIs for' sending and receiving facsimile by using PSTN/ISDN network from each application layer, registering/referring of various kinds of facsimile data managed by BKM (backup SRAM), facsimile reading, facsimile receiving and printing, and mixed sending and receiving.

The NCS 128 is a process for providing services commonly used for applications that need network I/O. The NCS 128 distributes data received from the network to a corresponding application, and acts as mediation between the application and the network when sending data to the network. More specifically, the process of the NCS 128 includes server daemon such as ftpd, httpd, lpd, snmpd, telnetd, smtpd, and client function of the protocols.

The process of the OCS 126 controls an operation panel that is a means for transferring information between the operator (user) and control parts of the machine. In the compound machine 100 of the embodiment, the OCS 126 includes an OCS process part and an OCS function library part. The OCS process part obtains an key event, which indicates that the key is pushed, from the operation panel, and sends a key event function corresponding to the key event to the SCS 122. The OCS function library registers drawing functions and other functions for controlling the operation panel, in which the drawing functions are used for outputting various images on the operation panel on the basis of a request from an application that has control right or from the control service. When the application is developed, functions in the OCS function library is linked to an object program that is generated by compiling a source code file of the application, so that an executable file of the application is generated. All of the OCS 126 can be configured as a process, or can be configured as an OCS library. In descriptions and figures in the after-mentioned embodiment, for obtaining information from the operation panel and for display information on the operation panel, functions of the OCS 126 are used even when the OCS 126 is not shown in the figure.

The application 130 includes a printer application 111 that is an application for a printer having page description language (PDL) and PCL and post script (PS), a copy application 112, a fax application 113 that is an application for facsimile, a scanner application 114 that is an application for a scanner, and a network file application 115. In addition, new applications 116-118 are included.

Interprocess communication is performed between a process of the application 130 and a process of the control service, in which a function is called, a returned value is sent, and a message is sent and received. By using the interprocess communication, user services for image forming processes such as copying, printing, scanning, and sending facsimile are realized.

In this embodiment, the VAS 140 is provided between the applications 130 and the platform 120. The VAS 140 is recognized as a service layer in the platform 120 from the application's point of view, and is recognized as an application from the service layer's point of view. That is, the VAS140 operates as a client process of a control service that is a server, and operates as a server process of an application that is a client. The VAS has a wrapping function that can hide the platform from applications. For example, according to this wrapping function, even if the control services are upgraded, the VAS 140 absorbs version differences between the applications and the platform 120 such that the applications can perform function calls without recompiling the applications.

In this embodiment, the VAS 140 operates as an application management module between the applications and the SCS 122, and performs processes for assigning applications to function keys with the SCS 122.

As mentioned above, the compound machine 100 of this embodiment includes a plurality of applications 130 and a plurality of control services, and each of those operates as processes. In each process, one or more threads are generated and the threads are executed in parallel. The control services provide common services to the applications 130. User services on image formation such as copying, printing, scanning and sending facsimile are provided while the processes are executed in parallel, the threads are executed in parallel, and interprocess communication is performed. A third party vendor can develop new applications for the compound machine 100, and can executes the applications in the application layer on the control service layer in the compound machine 100.

In the compound machine 100, although processes of applications 130 and processes of control services operate, the application and the control service can be a single process. In addition, an application in the applications 130 can be added or deleted one by one.

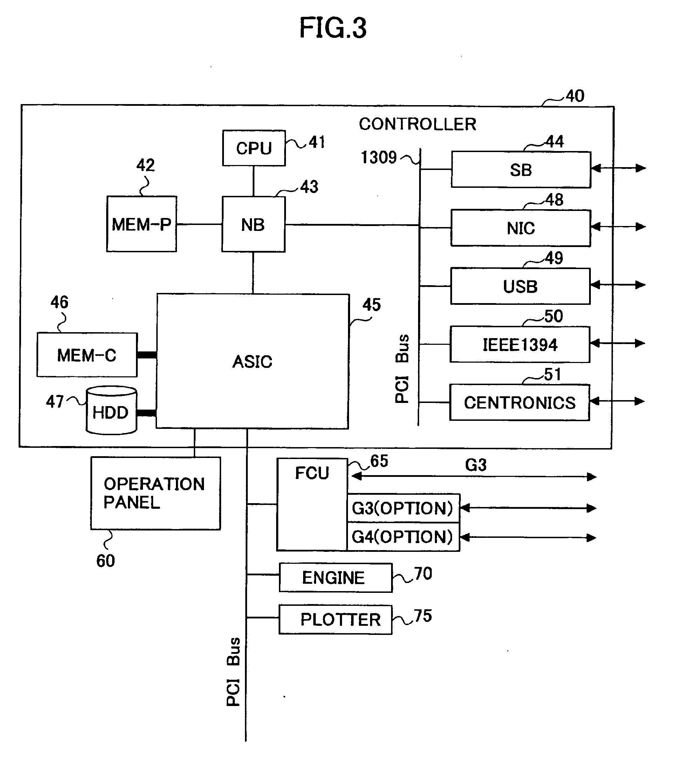

Fig.3 shows an example of a hardware configuration of the compound machine 100.

As shown in Fig.3, the compound machine 100 includes a controller 40, an operation panel 60, a fax control unit (FCU) 65, and an engine 70 and a plotter 75.

The controller 40 includes CPU 41, a MEM-P (system memory) 42, a north bridge (NB) 43, a south bridge (SB) 44, an ASIC 45, a MEM-C (local memory) 46, an HDD 47, a network interface card (NIC) 48, a SD card slot (not shown in the figure), a USB device 49, an IEEE1394 device 50, and a Centronics 51.

The operation panel 60 is connected to the ASIC 45 of the controller 40 directly. The FCU 176, interfaces, the engine 70 and the plotter 75 are connected to the ASIC 45 in the controller 40 via a PCI. bus.

The CPU 41 controls the compound machine 100. The NB 43 is a bridge for connecting the CPU 41, the MEM-P 42 and the ASIC 45. The MEM-P 42 is a system memory used as a drawing memory for example. The SB 44 is a bridge for connecting the NB 43 and peripheral devices. The MEM-C 46 is a local memory used as a copy image buffer, a code buffer and the like. The ASIC 45 is an IC for image processing including hardware for image processing. The HDD 47 is a storage for storing image data, programs, font data and the like.

In the following, the method for assigning an application to a function key is described according to the embodiment of the present invention.

First, operations performed on the operation panel for assigning an application to a function key are described by showing screen examples on the operation panel, in which the application is an application that is newly installed in the compound machine 100 and that is called "extension application" in this embodiment.

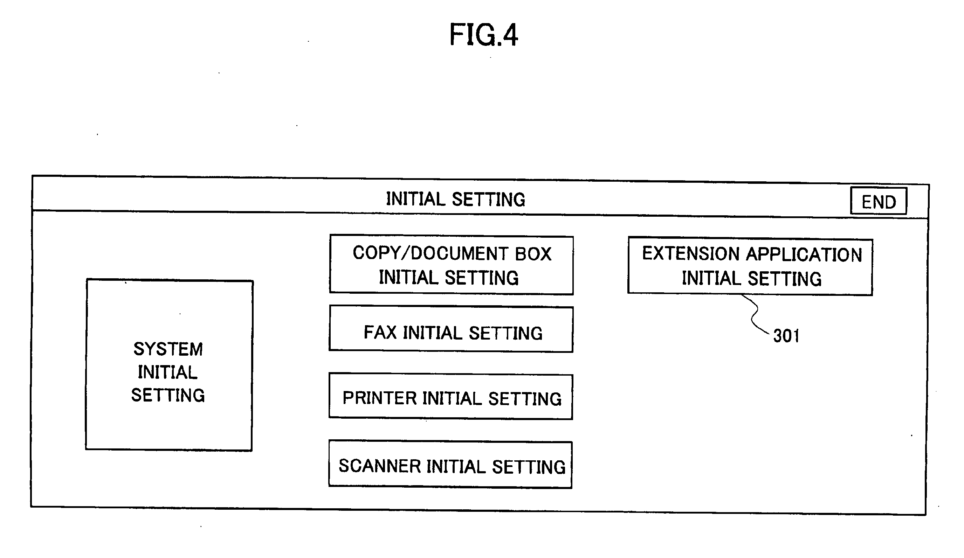

First, when the user pushes an initial setting key on the operation panel, the compound machine 100 displays an initial setting menu for each application as shown in Fig.4.

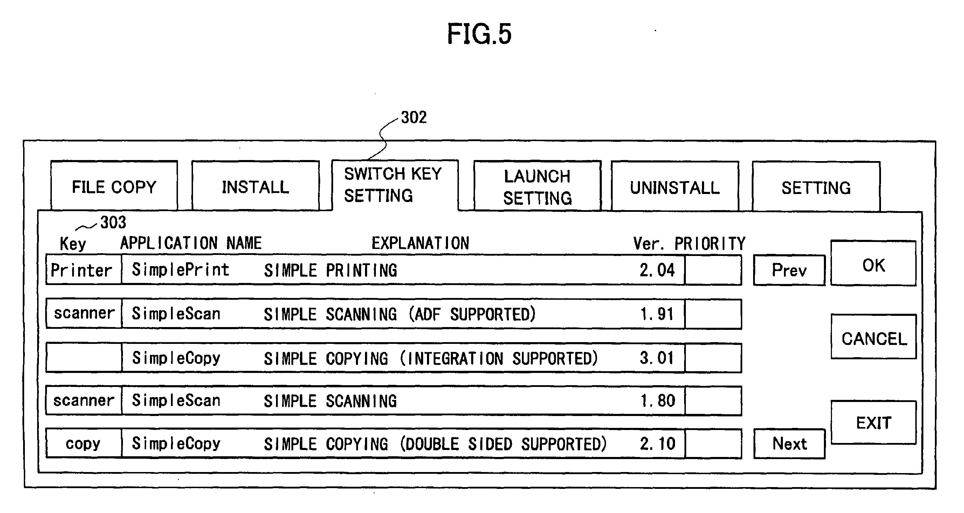

When the user selects an extension application initial setting screen 301, a menu screen for the extension application initial setting is displayed. In the extension application initial setting, the user can perform "file copy", "install", "switch key setting", "launch setting" or "uninstall". Among these options, when the user selects the switch key setting 302, a screen shown in Fig.5 is shown on the operation panel. In this screen, the function key is called as "switch key".

"SimplePrint" (simple printing), "SimpleScan" (simple scanning (ADF supported)), "'SimpleCopy" (simple copying (integration supported)), "SimpleScan" (simple scanning) and "SimpleCopy" (simple copying (double sided supported)) shown on the screen of Fig.5 are applications that have been installed or copied in the compound machine 100.

In the applications, an application (such as "SimplePrint") accompanied by a Key name (Printer and the like) at the left side indicates that the application is already assigned to a function key having the Key name. An application that is not accompanied by any key name such as "SimpleCopy" (paper integration supported) indicates that any function key is not allocated to the application.

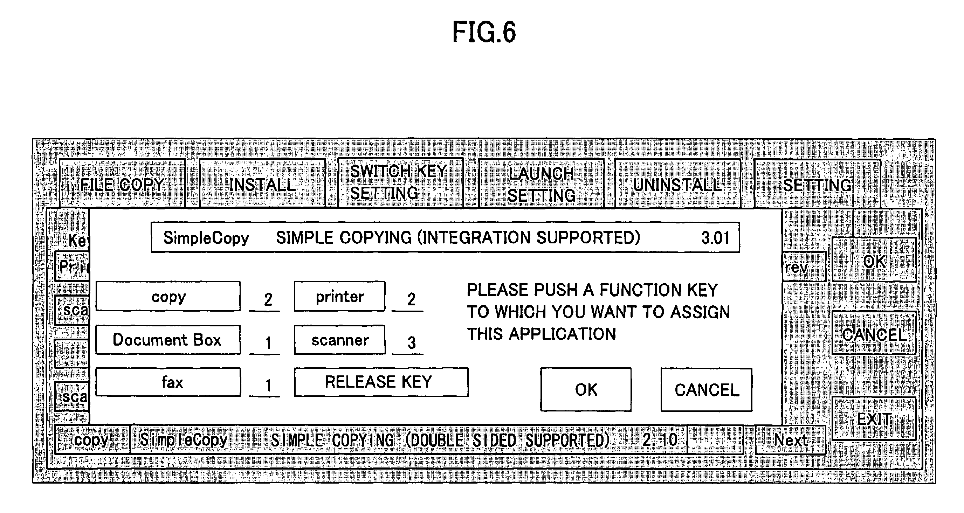

Therefore, when the user selects the "SimpleCopy (integration supported)" for assigning the application to a function key, a screen shown in Fig.6 is shown. That is, the screen displays a message "Please push a function key to which you want to assign this application". The screen shown in Fig.6 may be automatically displayed when an application is installed or when an application is copied in the compound machine 100. In such cases, the user can select an application before install of the application is started or before copy of the application is started. Then, after assignment of the function key ends, install or copy of the application is performed.

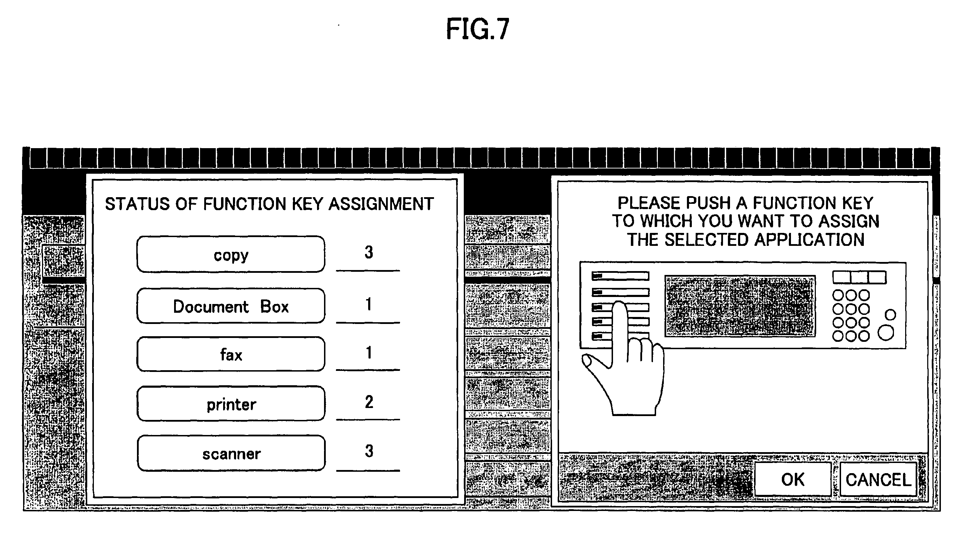

Instead of the screen shown in Fig.6, a screen shown in Fig.7 may be displayed. As shown in Fig.7, a guidance screen and a function key assignment status screen are shown on the touch panel. The guidance screen includes an image of the operation panel and an image for guiding the user to push a function key. By displaying the screen shown in Fig.7, the user can easily know what operation needs to be done for assigning the application to a function key. The compound machine 100 can be configured such that LEDs of each function key flashes at this time.

In each of Fig.6 and Fig.7, a function key assignment status is shown in the left side of the screen. In the function key assignment status, the number at the right side of each function key name indicates the number of applications assigned to the corresponding function key. For example, in Fig.6, two applications are allocated to the Copy function key, and three applications are allocated to the scanner function key.

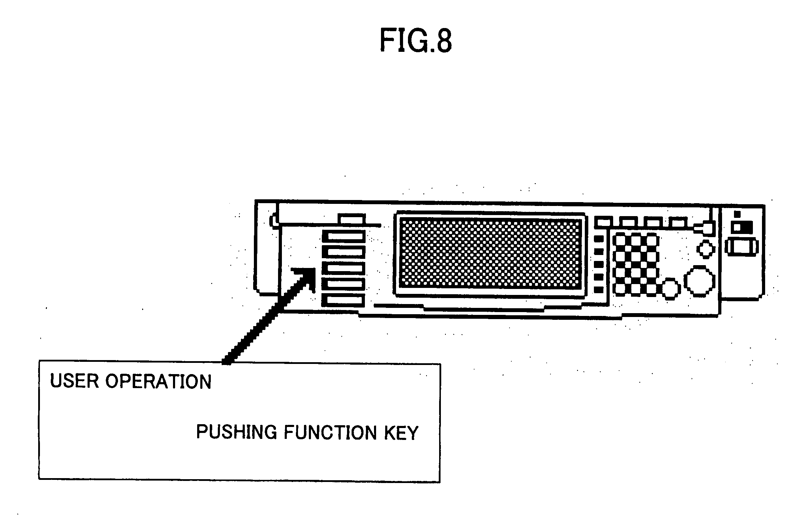

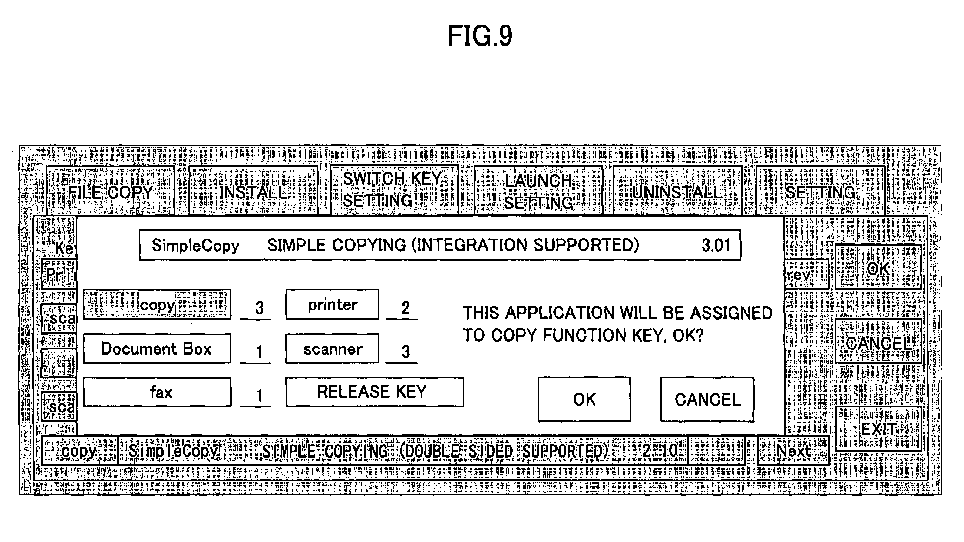

As shown in Fig.8, when the user pushes a function key to which the user wants to assign an application, a verification screen shown in Fig.9 is displayed. In this case, the screen indicates that the Copy function key has been pushed. The user checks the screen, and selects OK when the user verifies the screen.

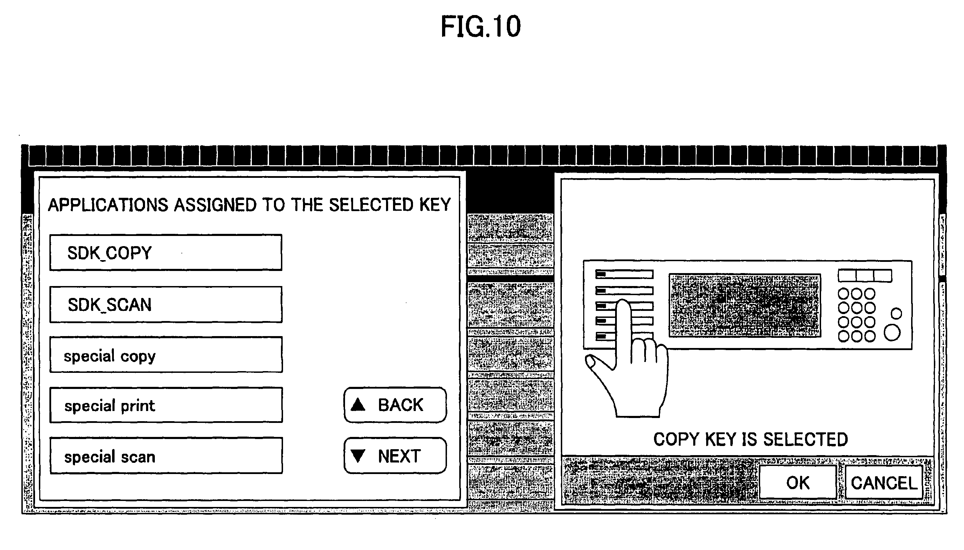

In the case when the guidance screen shown in Fig.7 is shown, a screen shown in Fig.10 may be displayed instead of the screen shown in Fig.9 after a function key is pushed. In the left side of the screen shown in Fig.10, a list of applications assigned to the pushed function key is shown. Accordingly, the user can check applications assigned to the pushed function key.

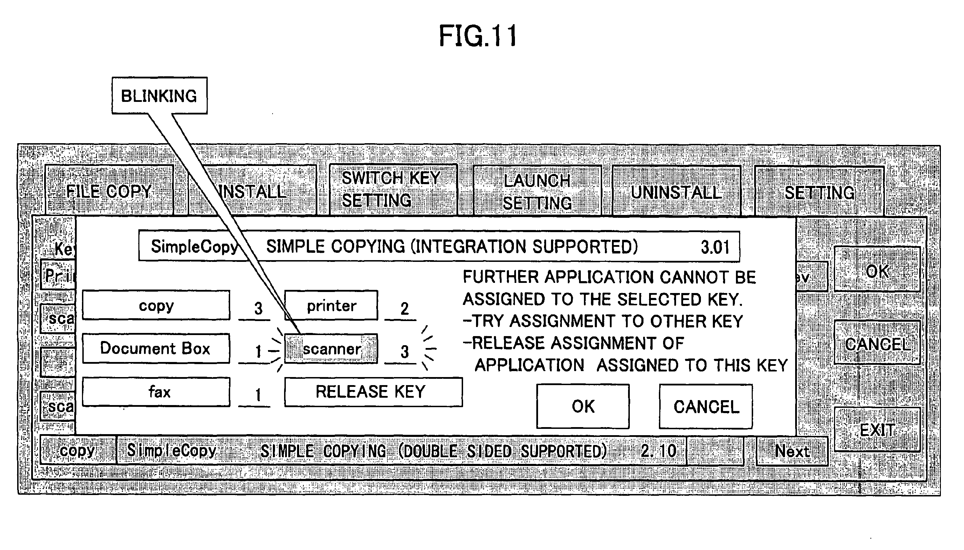

If the number of applications already reaches a predetermined limit number of applications that can be assigned to a function key when the user tries to assign an application to the function key, the region of the function key name blinks and a message is shown for recommending the user to assign the application to another function key or to release assignment of an application that has been assigned to the function key as shown in Fig.11. Fig.11 shows that the limit number of applications that can be allocated to the scanner function key is 3 and that "scanner" function key is pushed. If the number of applications that can be assigned to each function key is unlimited, the screen shown in Fig.11 is not shown.

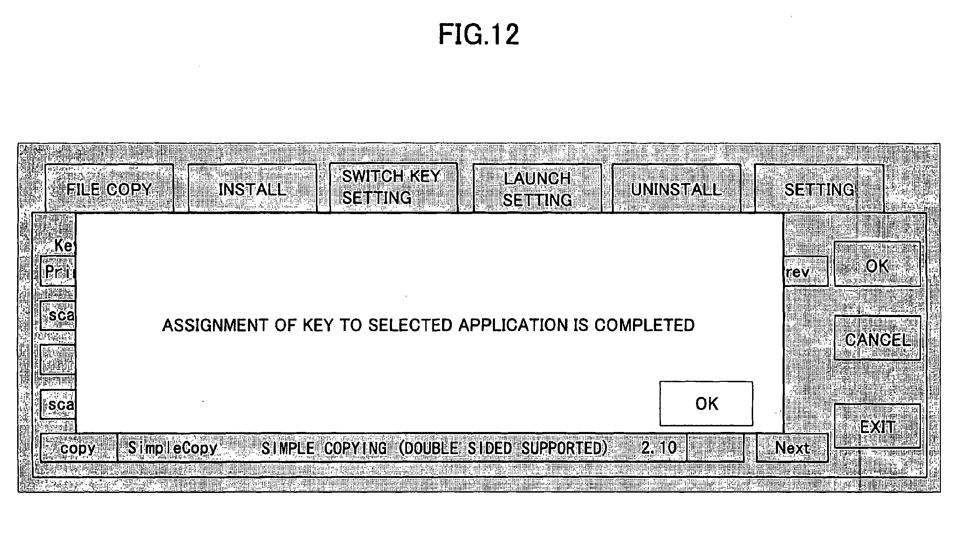

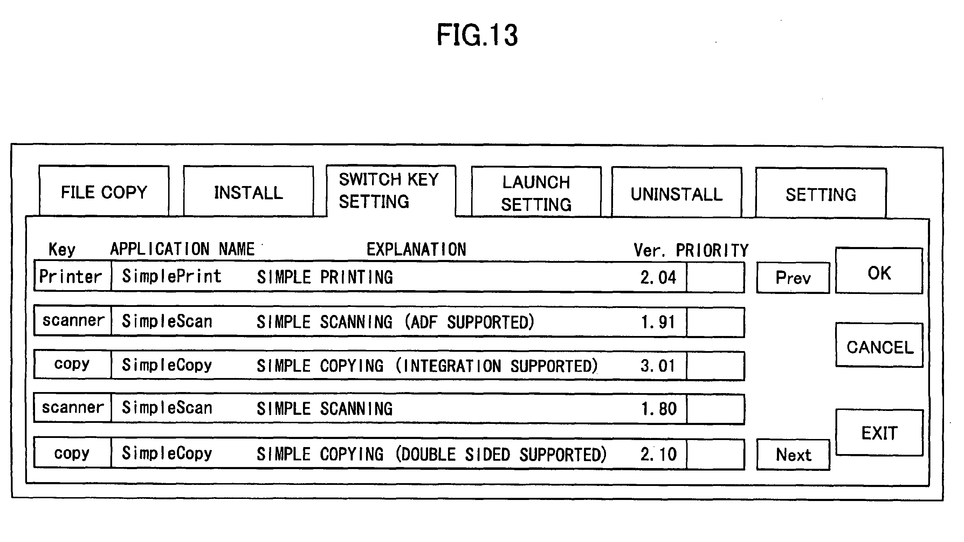

When the use selects "OK" in the screen of Fig.9 or Fig.10, a screen shown in Fig.12 is displayed notifying the user of completion of application assignment. After that, as shown in Fig.13, a screen showing that the "SimpleCopy" (integration supported) is assigned to the Copy function key is displayed.

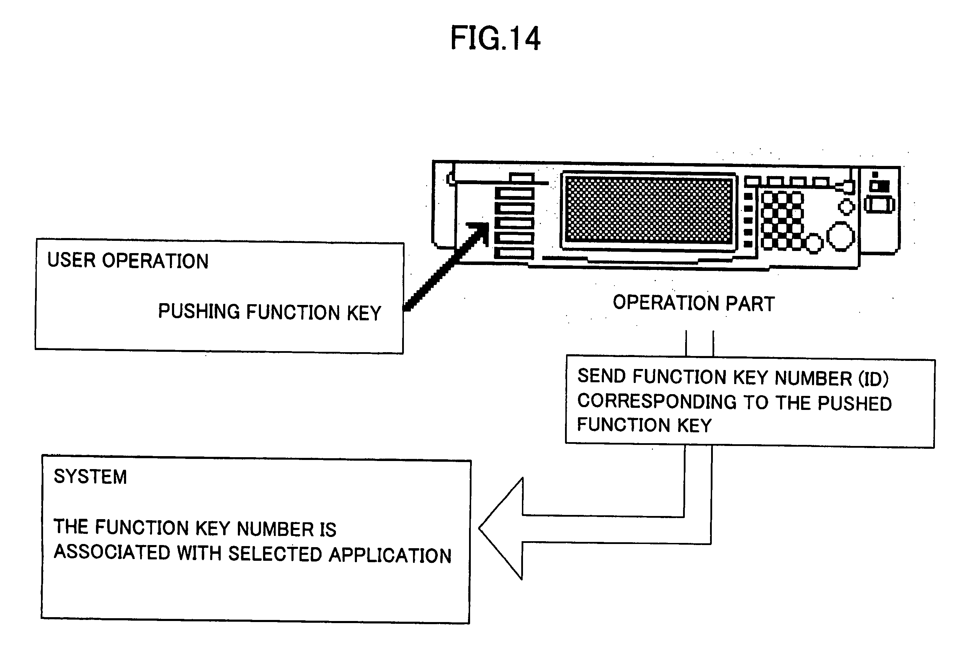

The above-mentioned series of operations are realized as shown in Fig.14. That is, in the switch key (function key) setting, when the user pushes a function key, an ID corresponding to the function key is notified of to the system service module (SCS 122 in this embodiment) of the compound machine 100, so that the system service module associates the ID with an application to be assigned to the function key.

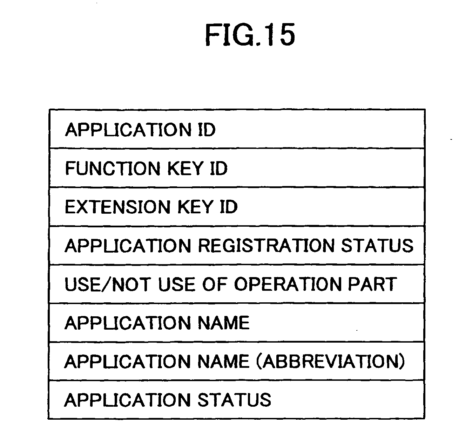

To associate the application with the corresponding function key ID, the compound machine 100 stores an application management table having items shown in Fig.15 in an storage such as the HDD 47. As shown in Fig.15, the application management table includes items: application ID, function key ID, extension key ID, application registration status, use or not-use of operation part, application name, application name (abbreviation), and application status. In the items, the extension key ID is used for identifying an application when a plurality of applications are allocated to a function key. The application is associated with the function key ID and the extension key ID. The application registration status indicates whether the application is installed or not. The use or no-use of operation part indicates whether the application has control right for the operation panel. The application status indicates whether the application can be used or not. As for allocation of an application to a function key, the application ID, the function key ID and the extension key ID are used.

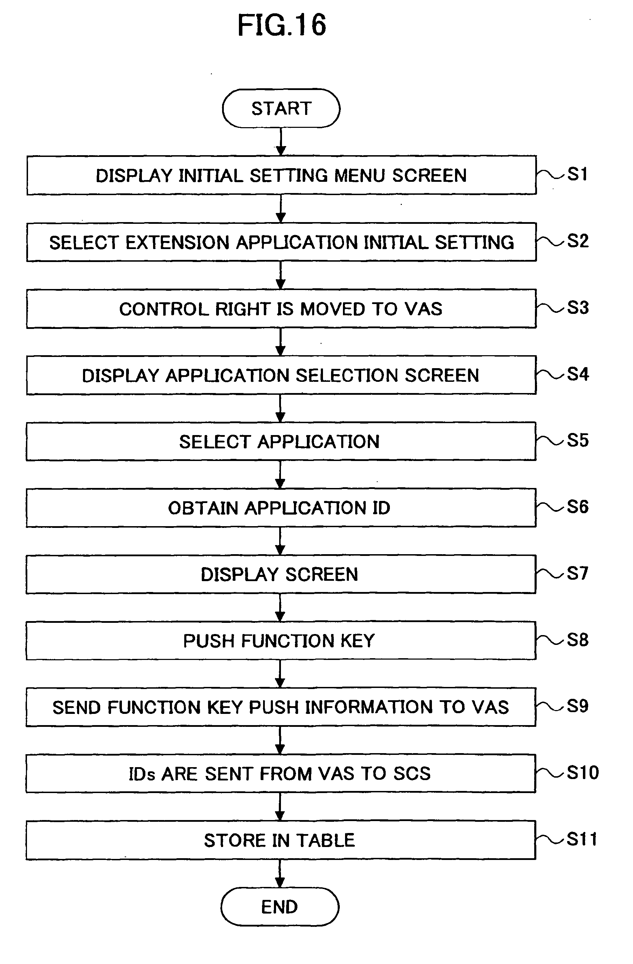

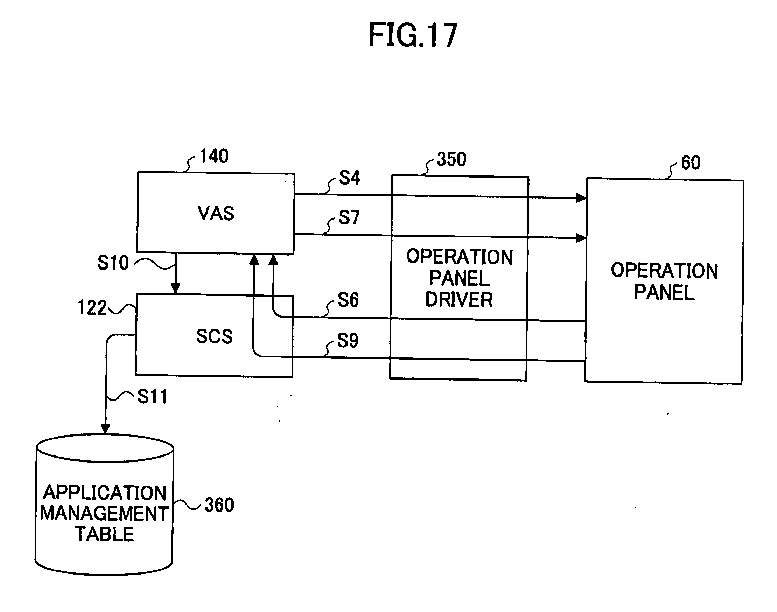

The operation of the compound machine 100 for assigning the application to the function key is described in detail with reference to a flowchart of Fig.16 and Fig.17 that shows exchange of main information among modules.

When the user pushes the initial setting key, the SCS 122 acquires control right (display right, and acquiring right for key push information) for the operation panel 60, and the SCS 122 displays an initial setting menu screen as shown in Fig.4 in step S1. At this time, the mode of the compound machine 100 is changed to another mode in which function key push information, that is not to be sent to the VAS or applications usually, is sent to the VAS 140.

Next, when the user selects "extension application initial setting" on the operation panel 60 in step 52, the SCS 122 changes the owner of control right of the operation panel 60 to the VAS 140 in step S3. This operation is performed by sending a control right providing notification message from the SCS 122 to the VAS 140.

When the "switch key setting" is selected on the extension application initial setting screen, the VAS 140 displays the selection screen shown in Fig.5 in step S4. When a target application ("SimpleCopy" (integration supported)) is selected from the operation panel 60 in step S5, the VAS 140 obtains the application ID of the target application in step S6 and displays a screen shown in Fig.6 or Fig.7 on the operation panel 60, and displays a message "Please push a function key to which you want to assign the selected application" in step S7.

Next, the user push a function key to which the user wants to assign the application in step S8.

The operation panel 60 notifies the SCS 122 of function key push information via an operation panel driver 350. Then, the SCS 122 notifies the VAS 140 of the function key push information in step S9. Although it is unusual that the SCS 122 notifies other application or the VAS 140 of the function key push information, the SCS 122 notifies the VAS 140 of the function key push information in the operation of function key assignment in the initial setting mode. The VAS 140 obtains the function key ID from the function key push information.

The VAS 140 sends the ID of the application, the function key ID, and the extension key ID to the SCS 122 in step S10, so that the VAS 140 requests the SCS 122 to store these items of information in the application management table 360. The extension key ID may be a number same as the number of applications to be assigned to the function key. For example, when the number is 1, the extension key ID may be 1, and when the number is 2, the extension key ID may be 2.

The SCS 122 stores the information in the application management table 360 in step S11, so that allocation completes, and a screen shown in Fig.12 is displayed.

After the function key setting for the application ends, the mode changes from the initial setting mode to the normal mode. In the normal mode, the function key push information is not sent to the VAS 140 or to applications.

For realizing restriction of the number of applications to be assigned to a function key as shown in Fig.11, for example, the application management table includes limit application numbers for each function key. When a function key is pushed, the limit number is compared with the number of applications to be assigned. If the number of applications to be assigned exceeds the limit number, the screen shown in Fig.11 is displayed.

As mentioned above, since the ID of the function key that the user actually pushes is sent from the VAS 140 to the SCS 122, and is stored in the application management table 360, there is no fear that an application may be assigned to a function key that cannot be used.

Next, operations for switching a currently used application to another application by using the function key are described with reference to examples of screens, in which the another application is already assigned to a function key in the above-mentioned way.

In the following example, a case is described in which five function keys (copy, document box, fax, printer, scanner) can be used, and three applications (the fax application, an extension application 1 and an extension application 2) are already assigned to the fax function key.

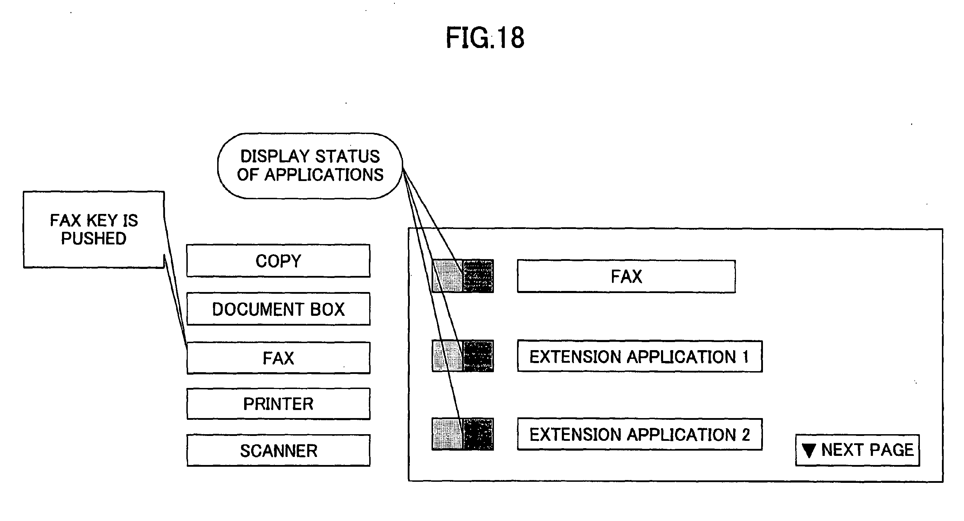

When the user pushes the fax function key, the three applications that are assigned to the function key are displayed as shown in Fig.18. In the example of Fig.18, for each of three applications, a status indication is shown in the left side of the application name, in which the status indicates whether the corresponding application can be currently usable or not. For example, the status indication is blue when the application can be used, and the status indication is red when the application.cannot be used. The status indication of the application can be also realized by turning on a LED provided in the function key if the number of application that is assigned to the function key is one. However, if a plurality of applications are assigned to the function key, a method shown in Fig.18 is effective. For displaying the status indication for each application as shown in Fig.18, the compound machine 100 checks whether conditions are satisfied for executing each application, and stores the result of the check in the application management table as the application status, so that the SCS 122 can know whether each application is usable or not, and the SCS 122 can display the screen shown in Fig.18. Instead of the SCS 122, each application itself may display the status indication of Fig.18.

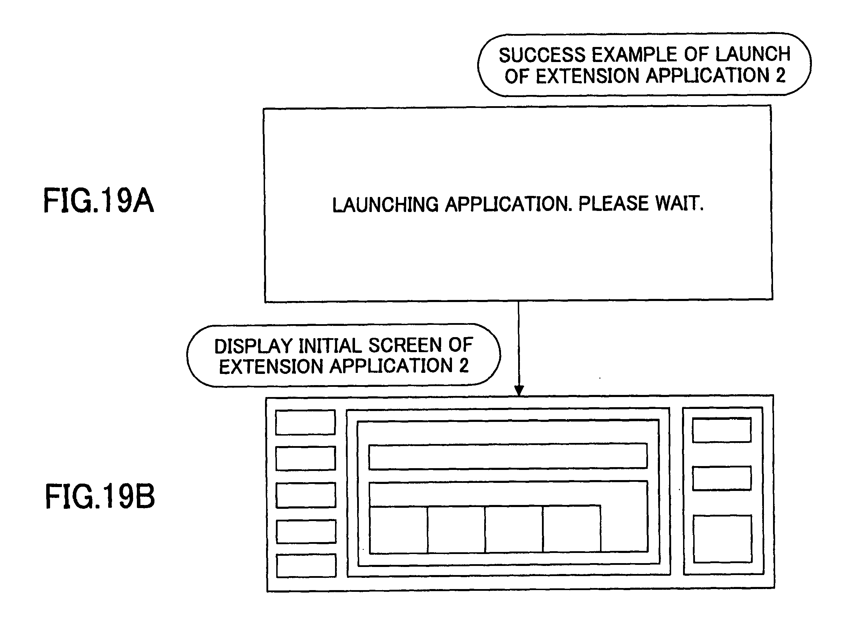

When the user selects the extension application 2 in the screen of Fig.18, the application is normally launched, so that a screen shown in Fig.19A is displayed. Then, an initial screen of the extension application 2 is displayed as shown in Fig.19B.

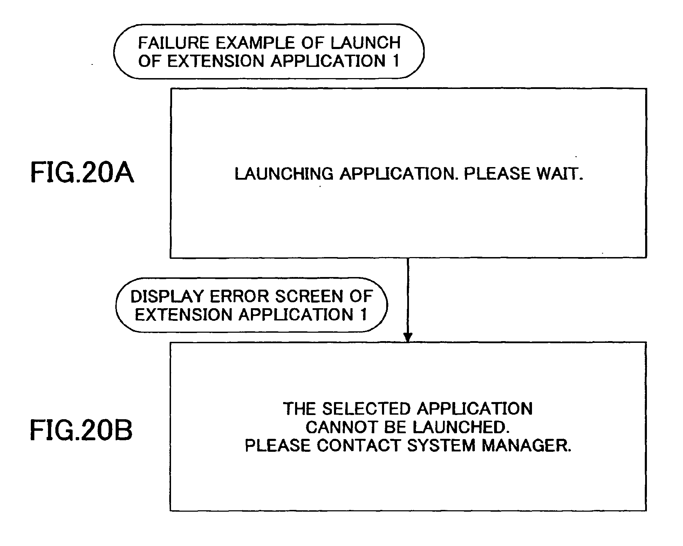

On the other hand, when the extension application 1 is selected, launch is failed, so that a screen shown in Fgi.20A is displayed. After that, a screen shown in Fig.20B is displayed. In the above example, a plurality of applications are allocated to the fax function key. If only one application is assigned to the function key, the selection screen shown in Fig.18 is not displayed. In such a case, soon after the function key is pushed, application switching is performed so that the assigned application is executed. That is, the fax application is launched.

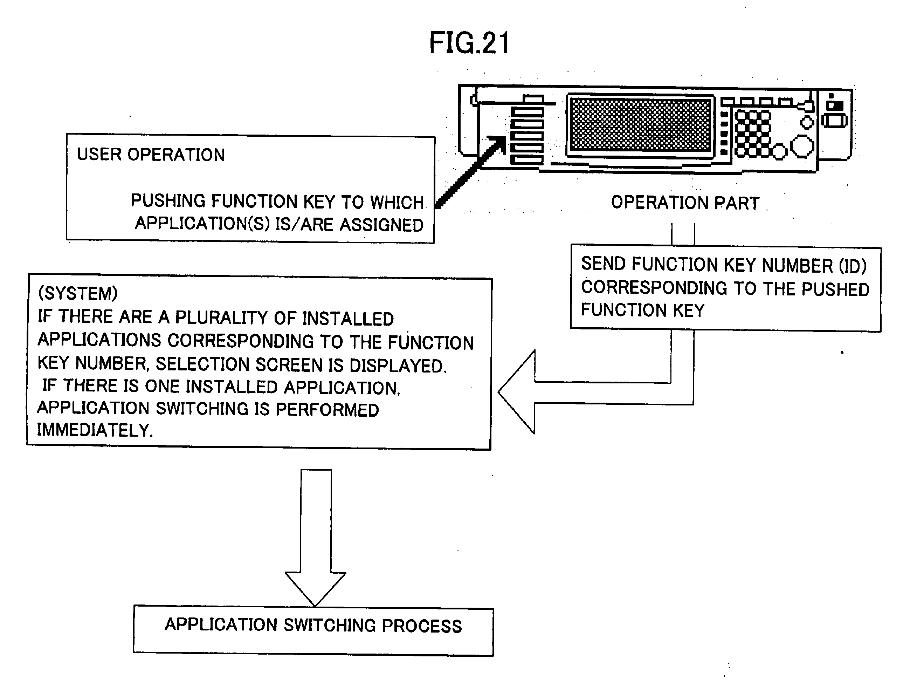

The above-mentioned series of operations are performed as shown in Fig.21 in the compound machine 100. First, when the user pushes a desired function key, a function key ID corresponding to the function key is sent to the service'module (SCS 122). The system service module displays the selection screen shown in Fig.18 if a plurality of applications are assigned to the function key. On the other hand, the system service module performs application switch operation if only one application is assigned to the function key. That is, an application corresponding to the pushed function key is launched.

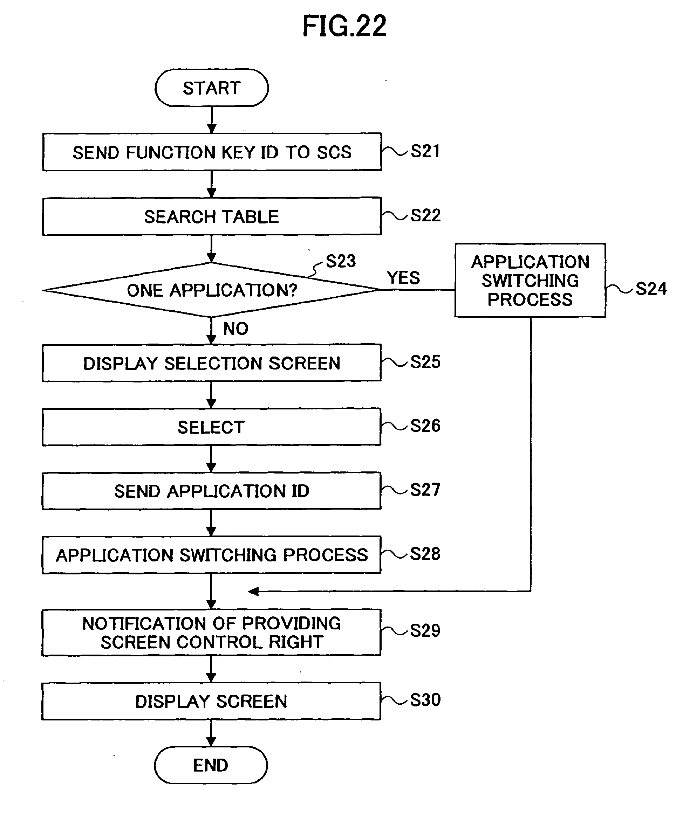

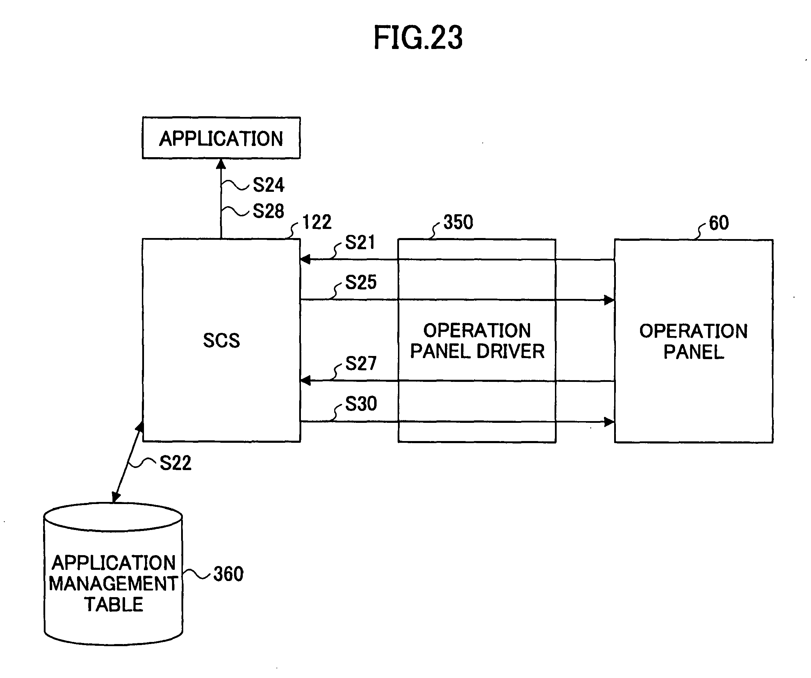

In the following, operations in the compound machine 100 for switching an application to another application by using the function key is described in detail with reference to a flowchart of Fig.22 and Fig.23 that shows exchange of main information among modules.

When the user pushes an function key to which an application that the user wants to use is assigned, function key push information (function key ID) is sent to the SCS 122 from the operation panel 60 via the operation panel driver 350 in step S21- The SCS 122 searches the application management table 360 for the application corresponding to the pushed function key by using the function key ID in step S22.

When the number of the assigned application is one (Yes in step S23) , the compound machine 100 immediately starts to switch the current application to the searched application in step S24.

When a plurality of applications are assigned (No in step S23), a screen shown in Fig.18 is displayed to enable the user to select one application. As shown in Fig.18, application selection buttons are shown on the application selection screen such that the user can select one application from a plurality of applications assigned to the pushed function key.

When the user specifies a desired application from the application selection screen in step S26, application selection button push information (application ID) is sent to the SCS 122 from the operation panel driver 350 in step S27. Then, the SCS 122 starts the process for switching current application to the application corresponding to the pushed application selection button in step S28 according to the application ID. In addition, the SCS 122 sends a screen control providing notification to the selected application such that the selected application obtains control right (display right, acquiring right for key push information) for the operation panel 60 in step S29.

At the time when the application receives the notification and returns a response indicating completion of preparation to the SCS 122, the SCS 122 requests the operation panel 60 to switch the screen. The operation panel 60 that receives the request displays an image corresponding to a display screen of the selected application in step S30.

After that, the SCS 122 sends key push information received from the operation panel 60 to the selected application that has the control right of the operation panel 60, that is, only to the selected application that is switched from a previously used application.

In the above-mentioned embodiment, the assignment of the function key is performed mainly by the SCS 122 and the VAS 140. However, the assignment of the function key can be also performed by any program module that has a function for displaying a screen on the operation panel 60, a function for obtaining information from the operation panel 60, a function for accessing the application management table and a function for performing above-mentioned processes for assigning an application to a function key.

Programs of the SCS 122 and the VAS 140 that include functions of the present invention or a program of the above-mentioned program module can be stored in a recording medium such as an IC card. From the IC card, the program can be installed in the compound machine 100. In addition, the program can be installed in the compound machine 100 from a remote server via a network.

### (Other embodiments)

In the application switch procedure using the function key shown in Fig.22, a selection screen shown in Fig.18 is displayed when a plurality of applications are assigned to one function key, so that the user selects one application. Instead of displaying such selection screen, the compound machine 100 can be configured such that the application can be specified according to the number of times the user pushes the function key continuously.

In this case, serial numbers 1, 2, 3,... are assigned to the extension key ID in the application management table according to the number of applications assigned to the corresponding function key, and the compound machine 100 switches a currently used application to an application corresponding to the extension key ID that corresponds to the number of times the user pushes the function key.

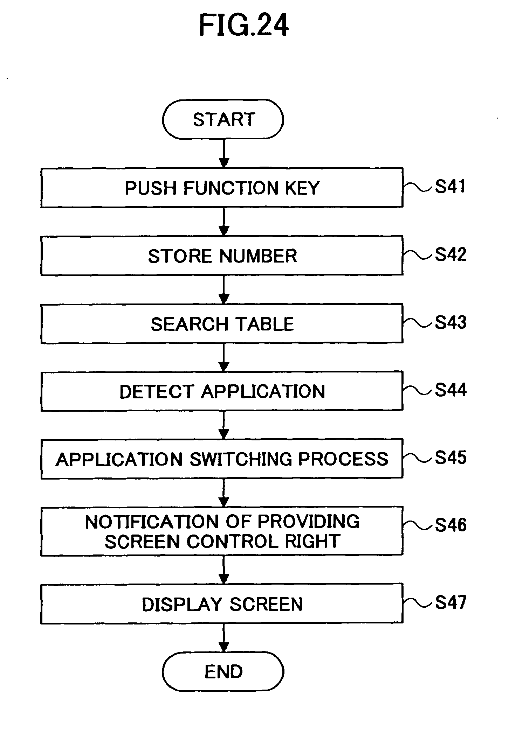

Fig.24 shows a flowchart of the application switching operation in this case. When the user pushes the function key multiple times in step S41, the SCS 122 receives the function key ID from the operation panel 60 a plurality of times. The SCS 122 stores the number of times of receiving the function key ID within a predetermined period in step S42.

The SCS 122 searches the application management table 360 by using the function key ID and the number of times to detect an application corresponding to the function key ID and corresponding extension key ID that is the same as the number of times in step S44. Then, the SCS 122 starts to switch the currently used application to the searched application in step S45. Processes after that are the same as those after step S29 in Fig.22.

Since an application can be switched to another application according to the above-mentioned procedure, the user can quickly switch an application to a desired application without performing operations on the selection screen on the touch panel. In addition, for example, the compound machine 100 can be configured such that a mode in which the selection screen is used or a mode in which only the function key is used can be selected for performing application switching operation. According to such configuration, for example, the user can select the mode using the selection screen if the user is not accustomed to operating the compound machine 100, and the user can select the mode using only the function key if the user is accustomed to operating the compound machine 100.

Although an application is switched to another application by using a function key that is a hardware key on the operation panel 60 in the embodiments described so far, application switching can be also performed by using a function selection button (software key) displayed on the operation display part (touch panel) without using the hardware function key. In this case, function selection buttons are displayed on the operation display part of the operation panel 60 and the user pushes (touches) a function selection button to select an application.

For example, a mode for application switching is provided in the compound machine 100, and when the user wants to perform application switching, the user selects the mode for application switching. Then, the compound machine 100 displays the function selection buttons. A function key ID is assigned to each function selection button in the same way as the hardware function key, so that application switching can be performed by using the function selection button in the same way as the case in which the hardware function key is used.

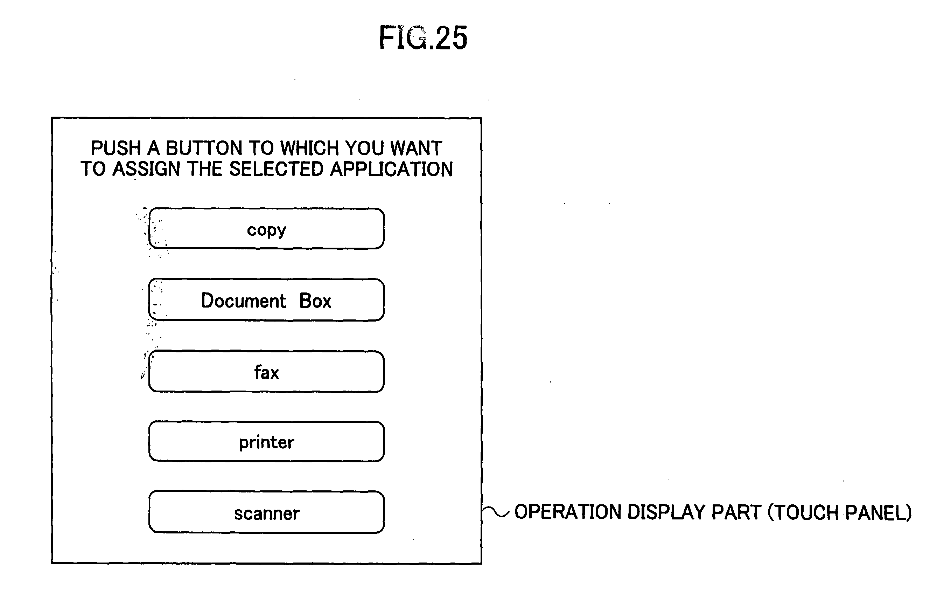

In addition, when the user wants to assign an application to a function selection button, for example, the user selects the switch key setting in the initial setting screen and selects an application. Then, the compound machine 100 displays the function selection buttons on the operation display part. After that, by pushing a function selection button, the application is assigned to the function selection button by performing processing same as that in the case in which the hardware function key is used. Fig.25 shows a screen example for assigning an application to a function selection button. The same buttons are displayed also when application switching is performed.

In each above-mentioned embodiment, an application is assigned to a function key by pushing a usable function key. Alternatively, by making the compound machine 100 to identify usable function keys, only usable function keys can be assigned to applications. In this case, for example, when a serviceman adds a key top on the operation panel to enable a function key, the serviceman registers information indicating that the key becomes usable to the compound machine 100. In addition, the compound machine 100 can be configured such that the information of the enabled function key is automatically recognized by the compound machine 100.

As mentioned above, by configuring the compound machine 100 such that it recognize usable function keys, the compound machine 100 displays only usable function keys for selection by the user when function key assignment is performed, so that the user can select only usable function keys.

The present invention is not limited to the specifically disclosed embodiments, and variations and modifications may be made without departing from the scope of the present invention.

The present application contains subject matter related to Japanese patent application No.2003-068147, filed in the JPO on March 13, 2003.

## Claims

1. An image forming apparatus that includes a printer (101, 102)
and a plurality of applications, the image forming apparatus comprising:
a displaying part (60) for displaying a screen used for selecting an application on an operation display part of the image forming apparatus; and
an assigning part (40) for assigning an application that is selected on the screen to a function key, the assignment being performed in response to the function key being pushed for the selected application;
wherein the function key is a key used for a user to select and execute an application from a plurality of applications; **characterised in that**:
when assignment of the selected application is performed, the image forming apparatus displays a screen indicating the number of applications assigned to a function key; and
when the function key is pushed for the selected application, the image forming apparatus displays a screen indicating that the function key cannot be assigned to the selected application if the number of applications assigned to the function key already reaches a limit number.

2. The image forming apparatus as claimed in claim 1, wherein the function key is a hardware key.

3. The image forming apparatus as claimed in claim 1, wherein the function key is a software key that is displayed on the operation display part of the image forming apparatus.

4. The image forming apparatus as claimed in claim 1, 2 or 3, wherein assignment by the assigning part is performed when the image forming apparatus is in a mode for assigning the selected application to the function key.

5. The image forming apparatus as described in claim 1, 2, 3 or 4 wherein, when assignment of the selected application is performed, the image forming apparatus displays a guidance screen indicating an operation of the function key on the operation display part of the image forming apparatus.

6. The image forming apparatus as claimed in claim 5, wherein the guidance screen includes an image of an operation panel of the image forming apparatus and an image for guiding a user to the function key.

7. The image forming apparatus as claimed in any one of the preceding claims, the assigning part including:
a part for obtaining a function key ID corresponding to the pushed function key; and
a part for storing an application ID of the selected application and the obtained function key ID in which the application ID is associated with the function key ID.

8. The image forming apparatus as claimed in claim 7, wherein, in addition to the function key ID, the image forming apparatus stores extension key IDs for identifying a plurality of applications assigned to the function key.

9. The image forming apparatus as claimed in claim 8, wherein the image forming apparatus selects one application from a plurality of applications in which the one application corresponds to an extension key ID that is the same as a number of times a user pushes the function key to which the plurality of applications are assigned within a time period.

10. The image forming apparatus as claimed in any one of claims 1 to 8, wherein, when a function key to which a plurality of applications are assigned is pushed, the image forming apparatus displays a screen including the names of the plurality of applications for a user to select one application from the plurality of applications.

11. The image forming apparatus as claimed in claim 10, wherein the image forming apparatus displays application status for each of the plurality of applications.

12. The image forming apparatus as claimed in any on of claims 1 to 8, wherein the image forming apparatus selects one application from a plurality of applications according to a number of times a user pushes a function key to which the plurality of applications are assigned within a time period.

13. A method used for assigning an application to a function key in an image forming apparatus that includes a printer (101, 102) and a plurality of applications, the method comprising the steps of:
displaying a screen used for selecting an application on an operation display part of the image forming apparatus; and
assigning an application that is selected on the screen to a function key, the assignment being performed in response to the function key being pushed for the selected application;
wherein the function key is a key used for a user to select and execute an application from a plurality of applications; **characterised in that**:
when assignment of the selected application is performed, the image forming apparatus displays a screen indicating the number of applications assigned to the function key; and
when the function key is pushed for the selected application, the image forming apparatus displays a screen indicating that the function key cannot be assigned to the selected application if the number of applications assigned to the function key already reaches a limit number.

14. The method as claimed in claim 13, wherein the function key is a hardware key.

15. The method as claimed in claim 14, wherein the function key is a software key that is displayed on the operation display part of the image forming apparatus.

16. The method as claimed in claim 13, wherein the step of assigning is performed when the image forming apparatus is in a mode for assigning the selected application to the function key.

17. The method as claimed in claim 13, 14 or 15 wherein, when assignment of the selected application is performed, the image forming apparatus displays a guidance screen indicating an operation of the function key on the operation display part of the image forming apparatus.

18. The method as claimed in claim 17, wherein the guidance screen includes an image of an operation panel of the image forming apparatus and an image for guiding a user to the function key.

19. The method as claimed in any one of claims 13 to 18 wherein, in the step of assigning, the image forming apparatus obtains a function key ID corresponding to the pushed function key; and stores an application ID of the selected application and the obtained function key ID in which the application ID is associated with the function key ID.

20. The method as claimed in claim 19, wherein, in addition to the function key ID, the image forming apparatus stores extension key IDs for identifying a plurality of applications assigned to the function key.

21. The method as claimed in claim 20, wherein the image forming apparatus selects one application from a plurality of applications in which the one application corresponds to an extension key ID that is the same as a number of times a user pushes the function key to which the plurality of applications are assigned within a time period.

22. The method as claimed in any one of claims 13 to 20 wherein, when a function key to which a plurality applications are assigned is pushed, the image forming apparatus displays a screen including the names of the plurality of applications for a user to select one application from the plurality of applications.

23. The method as claimed in claim 22, wherein the image forming apparatus displays application status for each of the plurality applications.

24. The method as claimed in any one of claims 13 to 22, wherein the image forming apparatus selects one application from a plurality of applications according to a number of times a user pushes a function key to which the plurality of applications are assigned within a time period.

25. A computer program comprising code means that, when executed by an image forming apparatus, instruct the image forming apparatus to perform the method of any one of claims 13 to 24.

26. A computer readable medium storing a computer program according to claim 25.

## Patentansprüche

1. Bilderzeugungsvorrichtung, die einen Drucker (101, 102) und mehrere Anwendungen enthält, wobei die Bilderzeugungsvorrichtung umfasst:
einen Anzeigeabschnitt (60) zum Anzeigen eines Bildschirms, der zum Auswählen einer Anwendung auf einem Betriebsanzeigeabschnitt der Bilderzeugungsvorrichtung verwendet wird; und
einen Zuweisungsabschnitt (40) zum Zuweisen einer Anwendung, die auf dem Bildschirm ausgewählt wird, zu einer Funktionstaste, wobei die Zuweisung in Reaktion darauf ausgeführt wird, dass die Funktionstaste für die ausgewählte Anwendung gedrückt wird;
wobei die Funktionstaste eine Taste ist, die verwendet wird, damit ein Benutzer eine Anwendung aus mehreren Anwendungen auswählen und ausführen kann; **dadurch gekennzeichnet, dass**:
dann, wenn eine Zuweisung der ausgewählten Anwendung ausgeführt wird, die Bilderzeugungsvorrichtung einen Bildschirm anzeigt, der die Anzahl von Anwendungen, die einer Funktionstaste zugewiesen sind, angibt; und
dann, wenn die Funktionstaste für die ausgewählte Anwendung gedrückt wird, die Bilderzeugungsvorrichtung einen Bildschirm anzeigt, der angibt, dass die Funktionstaste der ausgewählten Anwendung nicht zugewiesen werden kann, wenn die Anzahl von Anwendungen, die der Funktionstaste zugewiesen sind, bereits einen Grenzwert erreicht.

2. Bilderzeugungsvorrichtung nach Anspruch 1, wobei die Funktionstaste eine Hardware-Taste ist.

3. Bilderzeugungsvorrichtung nach Anspruch 1, wobei die Funktionstaste eine Software-Taste ist, die auf dem Betriebsbildschirmabschnitt der Bilderzeugungsvorrichtung angezeigt wird.

4. Bilderzeugungsvorrichtung nach Anspruch 1, 2 oder 3, wobei eine Zuweisung durch den Zuweisungsabschnitt ausgeführt wird, wenn die Bilderzeugungsvorrichtung in einer Betriebsart zum Zuweisen der ausgewählten Anwendung zu der Funktionstaste ist.

5. Bilderzeugungsvorrichtung nach Anspruch 1, 2, 3 oder 4, wobei dann, wenn eine Zuweisung der ausgewählten Anwendung ausgeführt wird, die Bilderzeugungsvorrichtung einen Leitbildschirm anzeigt, der einen Betrieb der Funktionstaste auf dem Betriebsanzeigeabschnitt der Bilderzeugungsvorrichtung angibt.

6. Bilderzeugungsvorrichtung nach Anspruch 5, wobei der Leitbildschirm eine Darstellung einer Bedienungskonsole der Bilderzeugungsvorrichtung und eine Darstellung zum Führen eines Benutzers zu der Funktionstaste enthält.

7. Bilderzeugungsvorrichtung nach einem der vorhergehenden Ansprüche, wobei der Zuweisungsabschnitt enthält:
einen Abschnitt zum Erhalten der Funktionstastenkennung, die der gedrückten Funktionstaste entspricht; und
einen Abschnitt zum Speichern einer Anwendungskennung der ausgewählten Anwendung und der erhaltenen Funktionstastenkennung, wobei die Anwendungskennung der Funktionstastenkennung zugeordnet ist.

8. Bilderzeugungsvorrichtung nach Anspruch 7, wobei die Bilderzeugungsvorrichtung zusätzlich zu der Funktionstastenkennung Erweiterungstastenkennungen zum Identifizieren von mehreren Anwendungen, die der Funktionstaste zugewiesen sind, speichert.

9. Bilderzeugungsvorrichtung nach Anspruch 8, wobei die Bilderzeugungsvorrichtung eine Anwendung von den mehreren Anwendungen auswählt, wobei die eine Anwendung einer Erweiterungstastenkennung entspricht, die gleich der Anzahl ist, wie oft ein Benutzer die Funktionstaste, der die mehreren Anwendungen zugewiesen sind, innerhalb einer Zeitperiode drückt.

10. Bilderzeugungsvorrichtung nach einem der Ansprüche 1 bis 8, wobei dann, wenn eine Funktionstaste, der mehrere Anwendungen zugewiesen sind, gedrückt wird, die Bilderzeugungsvorrichtung einen Bildschirm anzeigt, der die Bezeichnungen der mehreren Anwendungen enthält, damit ein Benutzer eine Anwendung aus den mehreren Anwendungen auswählt.

11. Bilderzeugungsvorrichtung nach Anspruch 10, wobei die Bilderzeugungsvorrichtung einen Anwendungsstatus für jede der mehreren Anwendungen anzeigt.

12. Bilderzeugungsvorrichtung nach einem der Ansprüche 1 bis 8, wobei die Bilderzeugungsvorrichtung eine Anwendung von den mehreren Anwendungen gemäß einer Anzahl, wie oft ein Benutzer eine Funktionstaste, der die mehreren Anwendungen zugewiesen sind, innerhalb einer Zeitperiode drückt, auswählt.

13. Verfahren, das zum Zuweisen einer Anwendung zu einer Funktionstaste in einer Bilderzeugungsvorrichtung, die einen Drucker (101, 102) und mehrere Anwendungen enthält, verwendet wird, wobei das Verfahren die folgenden Schritte umfasst:
Anzeigen eines Bildschirms, der zum Auswählen einer Anwendung auf einem Betriebsanzeigeabschnitts der Bilderzeugungsvorrichtung verwendet wird; und
Zuweisen einer Anwendung, die auf dem Bildschirm ausgewählt wird, zu einer Funktionstaste, wobei die Zuweisung in Reaktion darauf ausgeführt wird, dass die Funktionstaste für die ausgewählte Anwendung gedrückt wird;
wobei die Funktionstaste eine Taste ist, die verwendet wird, damit ein Benutzer eine Anwendung von mehreren Anwendungen auswählen und ausführen kann; **dadurch gekennzeichnet, dass**
dann, wenn die Zuweisung der ausgewählte Anwendung ausgeführt wird, die Bilderzeugungsvorrichtung einen Bildschirm anzeigt, der die Anzahl von Anwendungen, die der Funktionstaste zugewiesen sind, angibt; und
dann, wenn die Funktionstaste für die ausgewählte Anwendung gedrückt wird, die Bilderzeugungsvorrichtung einen Bildschirm anzeigt, der angibt, dass die Funktionstaste der ausgewählten Anwendung nicht zugewiesen werden kann, wenn die Anzahl von Anwendungen, die der Funktionstaste zugewiesen sind, bereits einen Grenzwert erreicht.

14. Verfahren nach Anspruch 13, wobei die Funktionstaste eine Hardware-Taste ist.

15. Verfahren nach Anspruch 14, wobei die Funktionstaste eine Software-Taste ist, die auf dem Betriebsbildschirmabschnitt der Bilderzeugungsvorrichtung angezeigt wird.

16. Verfahren nach Anspruch 13, wobei der Schritt zum Zuweisen ausgeführt wird, wenn die Bilderzeugungsvorrichtung in einer Betriebsart zum Zuweisen der ausgewählten Anwendung zu der Funktionstaste ist.

17. Verfahren nach Anspruch 13, 14 oder 15, wobei dann, wenn eine Zuweisung der ausgewählten Anwendung ausgeführt wird, die Bilderzeugungsvorrichtung einen Leitbildschirm anzeigt, der einen Betrieb der Funktionstaste auf dem Betriebsanzeigeabschnitt der Bilderzeugungsvorrichtung angibt.

18. Verfahren nach Anspruch 17, wobei der Leitbildschirm eine Darstellung eines Bedienungskonsole der Bilderzeugungsvorrichtung und eine Darstellung zum Führen eines Benutzers zu der Funktionstaste enthält.

19. Verfahren nach einem der Ansprüche 13 bis 18, wobei die Bilderzeugungsvorrichtung in dem Schritt zum Zuweisen eine Funktionstastenkennung, die der gedrückten Funktionstaste entspricht, erhält; und eine Anwendungskennung der ausgewählten Anwendung und die erhaltene Funktionstastenkennung speichert, wobei die Anwendungskennung der Funktionstastenkennung zugeordnet ist.

20. Verfahren nach Anspruch 19, wobei die Bilderzeugungsvorrichtung zusätzlich zu der Funktionstastenkennung Erweiterungstastenkennungen zum Identifizieren von mehreren Anwendungen, die der Funktionstaste zugewiesen sind, speichert.

21. Verfahren nach Anspruch 20, wobei die Bilderzeugungsvorrichtung eine Anwendung von mehreren Anwendungen auswählt, wobei die eine Anwendung einer Erweiterungstastenkennung entspricht, die gleich einer Anzahl ist, wie oft ein Benutzer eine Funktionstaste, der die mehreren Anwendungen zugewiesen sind, innerhalb einer Zeitperiode drückt.

22. Verfahren nach einem der Ansprüche 13 bis 20, wobei dann, wenn eine Funktionstaste, der mehrere Anwendungen zugewiesen sind, gedrückt wird, die Bilderzeugungsvorrichtung einen Bildschirm anzeigt, der die Bezeichnungen der mehreren Anwendungen enthält, damit ein Benutzer eine Anwendung aus den mehreren Anwendungen auswählt.

23. Verfahren nach Anspruch 22, wobei die Bilderzeugungsvorrichtung einen Anwendungsstatus für jede der mehreren Anwendungen anzeigt.

24. Verfahren nach einem der Ansprüche 13 bis 22, wobei die Bilderzeugungsvorrichtung eine Anwendung von den mehreren Anwendungen gemäß einer Anzahl, wie oft ein Benutzer eine Funktionstaste, der die mehreren Anwendungen zugewiesen sind, innerhalb einer Zeitperiode drückt, auswählt.

25. Computerprogramm, das Codemittel umfasst, die dann, wenn sie durch eine Bilderzeugungsvorrichtung ausgeführt werden, die Bilderzeugungsvorrichtung anweisen, das Verfahren nach einem der Ansprüche 13 bis 24 auszuführen.

26. Computerlesbares Medium, das ein Computerprogramm nach Anspruch 25 speichert.

## Revendications

1. Appareil de formation d'image qui comprend une imprimante (101, 102) et une pluralité d'applications, l'appareil de formation d'image comprenant :
une partie d'affichage (60) pour afficher un écran utilisé pour sélectionner une application sur une partie d'affichage d'opérations de l'appareil de formation d'image ; et
une partie d'attribution (40) pour attribuer une application qui est sélectionnée sur l'écran à une touche de fonction, l'attribution étant effectuée en réponse à l'enfoncement de la touche de fonction pour l'application sélectionnée ;
dans lequel la touche de fonction est une touche utilisée pour qu'un utilisateur sélectionne et exécute une application parmi une pluralité d'applications ; **caractérisé en ce que** :
lorsqu'une attribution de l'application sélectionnée est effectuée, l'appareil de formation d'image affiche un écran indiquant le nombre d'applications attribuées à une touche de fonction ; et
lorsque la touche de fonction est enfoncée pour l'application sélectionnée, l'appareil de formation d'image affiche un écran indiquant que la touche de fonction ne peut pas être attribuée à l'application sélectionnée si le nombre d'applications attribuées à la touche de fonction atteint déjà un nombre limite.

2. Appareil de formation d'image selon la revendication 1, dans lequel la touche de fonction est une touche matérielle.

3. Appareil de formation d'image selon la revendication 1, dans lequel la touche de fonction est une touche logicielle qui est affichée sur la partie d'affichage d'opérations de l'appareil de formation d'image.

4. Appareil de formation d'image selon la revendication 1, 2 ou 3, dans lequel l'attribution par la partie d'attribution est effectuée lorsque l'appareil de formation d'image est dans un mode pour attribuer l'application sélectionnée à la touche de fonction.

5. Appareil de formation d'image selon la revendication 1, 2, 3 ou 4, dans lequel, lorsque l'attribution de l'application sélectionnée est effectuée, l'appareil de formation d'image affiche un écran de guidage indiquant une opération de la touche de fonction sur la partie d'affichage d'opérations de l'appareil de formation d'image.

6. Appareil de formation d'image selon la revendication 5, dans lequel l'écran de guidage comprend une image d'un panneau de commande de l'appareil de formation d'image et une image pour guider un utilisateur pour la touche de fonction.

7. Appareil de formation d'image selon l'une quelconque des revendications précédentes, la partie d'attribution comprenant :
une partie pour obtenir un identifiant de touche de fonction correspondant à la touche de fonction enfoncée ; et
une partie pour mémoriser un identifiant d'application de l'application sélectionnée et l'identifiant de touche de fonction obtenu où l'identifiant d'application est associé à l'identifiant de touche de fonction.

8. Appareil de formation d'image selon la revendication 7, dans lequel, en plus de l'identifiant de touche de fonction, l'appareil de formation d'image mémorise des identifiants de touches d'extension pour identifier une pluralité d'applications attribuées à la touche de fonction.

9. Appareil de formation d'image selon la revendication 8, dans lequel l'appareil de formation d'image sélectionne une application parmi une pluralité d'applications, dans lequel ladite application correspond à un identifiant de touche d'extension qui est identique à un nombre de fois qu'un utilisateur enfonce la touche de fonction à laquelle la pluralité d'applications sont attribuées dans une période de temps.

10. Appareil de formation d'image selon l'une quelconque des revendications 1 à 8, dans lequel, lorsqu'une touche de fonction à laquelle une pluralité d'applications sont attribuées est enfoncée, l'appareil de formation d'image affiche un écran comprenant les noms de la pluralité d'applications pour qu'un utilisateur sélectionne une application parmi la pluralité d'applications.

11. Appareil de formation d'image selon la revendication 10, dans lequel l'appareil de formation d'image affiche un état d'application pour chacune de la pluralité d'applications.

12. Appareil de formation d'image selon l'un quelconque des revendications 1 à 8, dans lequel l'appareil de formation d'image sélectionne une application parmi une pluralité d'applications en fonction d'un nombre de fois qu'un utilisateur enfonce une touche de fonction à laquelle la pluralité d'applications sont attribuées dans une période de temps.

13. Procédé utilisé pour attribuer une application à une touche de fonction dans un appareil de formation d'image qui comprend une imprimante (101, 102) et une pluralité d'applications, le procédé comprenant les étapes consistant à :
afficher un écran utilisé pour sélectionner une application sur une partie d'affichage d'opérations de l'appareil de formation d'image ; et
attribuer une application qui est sélectionnée sur l'écran à une touche de fonction, l'attribution étant effectuée en réponse à l'enfoncement de la touche de fonction pour l'application sélectionnée ;
dans lequel la touche de fonction est une touche utilisée pour qu'un utilisateur sélectionne et exécute une application parmi une pluralité d'applications ; **caractérisé en ce que** :
lorsque l'attribution de l'application sélectionnée est effectuée, l'appareil de formation d'image affiche un écran indiquant le nombre d'applications attribuées à la touche de fonction ; et
lorsque la touche de fonction est enfoncée pour l'application sélectionnée, l'appareil de formation d'image affiche un écran indiquant que la touche de fonction ne peut pas être attribuée à l'application sélectionnée si le nombre d'applications attribuées à la touche de fonction atteint déjà un nombre limite.

14. Procédé selon la revendication 13, dans lequel la touche de fonction est une touche matérielle.

15. Procédé selon la revendication 14, dans lequel la touche de fonction est une touche logicielle qui est affichée sur la partie d'affichage d'opérations de l'appareil de formation d'image.

16. Procédé selon la revendication 13, dans lequel l'étape d'attribution est effectuée lorsque l'appareil de formation d'image est dans un mode pour attribuer l'application sélectionnée à la touche de fonction.

17. Procédé selon la revendication 13, 14 ou 15, dans lequel, lorsque l'attribution de l'application sélectionnée est effectuée, l'appareil de formation d'image affiche un écran de guidage indiquant une opération de la touche de fonction sur la partie d'affichage d'opérations de l'appareil de formation d'image.

18. Procédé selon la revendication 17, dans lequel l'écran de guidage comprend une image d'un panneau de commande de l'appareil de formation d'image et une image pour guider un utilisateur pour la touche de fonction.

19. Procédé selon l'une quelconque des revendications 13 à 18, dans lequel, à l'étape d'attribution, l'appareil de formation d'image obtient un identifiant de touche de fonction correspondant à la touche de fonction enfoncée ; et mémorise un identifiant d'application de l'application sélectionnée et l'identifiant de touche de fonction obtenu où l'identifiant d'application est associé à l'identifiant de touche de fonction.

20. Procédé selon la revendication 19, dans lequel, en plus de l'identifiant de touche de fonction, l'appareil de formation d'image mémorise des identifiants de touches d'extension pour identifier une pluralité d'applications attribuées à la touche de fonction.

21. Procédé selon la revendication 20, dans lequel l'appareil de formation d'image sélectionne une application parmi une pluralité d'applications, dans lequel ladite application correspond à un identifiant de touche d'extension qui est identique à un nombre de fois qu'un utilisateur enfonce la touche de fonction à laquelle la pluralité d'applications sont attribuées dans une période de temps.

22. Procédé selon l'une quelconque des revendications 13 à 20, dans lequel, lorsqu'une touche de fonction à laquelle une pluralité d'applications sont attribuées est enfoncée, l'appareil de formation d'image affiche un écran comprenant les noms de la pluralité d'applications pour qu'un utilisateur sélectionne une application parmi la pluralité d'applications.

23. Procédé selon la revendication 22, dans lequel l'appareil de formation d'image affiche un état d'application pour chacune de la pluralité d'applications.

24. Procédé selon l'une quelconque des revendications 13 à 22, dans lequel l'appareil de formation d'image sélectionne une application parmi une pluralité d'applications en fonction d'un nombre de fois qu'un utilisateur enfonce une touche de fonction à laquelle la pluralité d'applications sont attribuées dans une période de temps.

25. Programme d'ordinateur comprenant des moyens formant code qui, lorsqu'ils sont exécutés par un appareil de formation d'image, ordonnent à l'appareil de formation d'image de mettre en oeuvre le procédé selon l'une quelconque des revendications 13 à 24.

26. Support pouvant être lu par un ordinateur mémorisant un programme d'ordinateur selon la revendication 25.
